# EUROPEAN PATENT SPECIFICATION

(11) **EP 2 159 082 B1**
(45) Date of publication and mention of the grant of the patent: **01.04.2015**
(21) Application number: 08753033.3
(22) Date of filing: 21.05.2008
(51) Int. Cl.: B60C 15/04, D07B 1/06, D07B 1/08

(54) **PNEUMATIC TIRE**
LUFTREIFEN
PNEU

(30) Priority: 21.05.2007 JP 2007134120
(43) Date of publication of application: 03.03.2010
(73) Proprietor: Bridgestone Corporation, Tokyo 104-8340 (JP)
(72) Inventor: YAMAZAKI, Shinichiro, Kodaira-shi Tokyo 187-8531 (JP)
(74) Representative: Oxley, Robin John George
(86) International application number: PCT/JP2008/059356
(87) International publication number: WO 2008/143288

(56) References cited:
- EP-A2- 0 288 986
- JP-A- 2 179 516
- JP-A- 07 279 070
- JP-A- 49 119 301
- JP-A- 53 102 389
- JP-A- 63 312 207
- JP-A- 2005 145 082
- JP-A- 2005 313 735
- JP-A- 2007 022 414
- JP-U- 55 063 205
- US-A- 4 321 957
- US-A- 4 662 961

## Description

### Technical Field

The present invention relates to a pneumatic tire including: a pair of bead portions having bead cores embedded therein, each bead core being constituted of plural bead wires extending in the tire circumferential direction; a pair of side wall portions extending from the bead portions toward the outer side in the tire radial direction; a tread portion extending over the respective sidewall portions; and a carcass extending in a toroidal shape across the aforementioned portions and having respective end portions thereof being turned up around the bead cores.

### Prior Art

In general, a bead core of a pneumatic tire has an important function of holding a carcass, as well as enhancing fitted engagement of a tire with a rim to ensure sealing property of the tire. In order to make these functions be appropriately performed, it is normally necessary to suppress shape deformation of the bead core during a vulcanization process and improve the assembling property of a tire with a rim.

In view of this, there has conventionally been made a proposal, as disclosed in JP 49-119301 Laid-Open, to form a bead core by winding a bead wire having a quadrilateral section with opposite two sides in parallel with each other in the tire widthwise direction such that the bead wires are in contact with each other in the tire widthwise direction and radial direction, thereby increasing a contact area of adjacent bead wires to enhance stability in shape of the bead cores.

Further, there has been made a proposal, as disclosed in JP 63-312207 Laid-Open, to improve stability in shape of a bead core and the assembling property with a rim by using a bead wire having a shape in which, in a section in the tire widthwise direction, opposite sides in the tire radial direction are in parallel with each other and the distance between the opposite sides on the side portions varies.

Attention is drawn to the disclosures of US 4321957 and EP 0288986.

### Disclosure of the Invention

### Problems to be solved by the Invention

However, the tires as disclosed in the aforementioned references, although they are capable of suppressing deformation in shape of bead cores during a vulcanization process and improving the assembling property of a tire with a rim, do not pay so much attention to durability of the tire, in particular, to durability of a bead portion and therefore are not satisfactory in terms of durability of the bead portions in view of the recent increasing demand for heavier load. Specifically, when a tire is inflated and the shape of the tire is changed over time, bead wires are subjected to deformation causing rotation in a direction in which a carcass is pulled out in a sectional view in the tire widthwise direction. This deformation of the bead wires decreases the holding force on the carcass and causes pulling-out of the carcass, possibly resulting in a problem of deteriorated durability of the bead portion.

In view of the problem above, an object of the present invention is to provide a pneumatic tire in which a sectional shape of each bead wire and arrangement of the bead wires have been optimized to suppress pulling-off of a carcass, so that durability of the bead portion can be enhanced.

### Means for solving the Problem

The present invention has been contrived to solve the problem described above. The present invention provides a pneumatic tire according to claim 1.

In the pneumatic tire described above, the adjacent bead wires in the bead core are engaged with each other due to the complementary shape portions thereof, whereby the bead wires can smoothly transfer stresses to each other. Due to this, rotational stress applied on the bead core when the tire is inflated and the shape of the tire is changed over time is effectively dispersed such that rotational change of the bead core as a whole is reduced (in other words, rotational rigidity thereof is enhanced). Further, since the aforementioned complementary shape portions of the bead wires act to restrict relative movement of adjacent bead wires when rotational stress is applied on the bead core, movement of the bead wires in a section in the tire radial direction is suppressed. As a result, the distribution of tension in a section in the tire widthwise direction in each bead wire upon application of rotational stress on the bead core is made even.

Further, in the pneumatic tire of the present invention, each bead wire preferably has in a section in the tire widthwise direction two linear portions parallel to each other and linearly extending at a slant with respect to the tire radial direction. The complementary portions are preferably arranged between the two linear portions.

Yet further, the complementary portions preferably extend all across a section between the two linear portions.

Yet further, the total length in the tire widthwise direction of the complementary shape portions of each bead wire is preferably at least 20 % of the length in the tire widthwise direction of the bead wire.

Yet further, each bead wire preferably has a contour configuration in a section in the tire widthwise direction, which contour configuration is obtained by making two squares or rectangles of the same shape overlap with each other in an offset manner.

Yet further, each bead wire is preferably point-symmetrical about the center of gravity in a section in the tire widthwise direction thereof.

Yet further, a corner portion formed in a transient region from the linear portion to the complementary portion of each bead wire is preferably chamfered. In the present invention, "chamfering" represents not only imparting the corner portion with a linear slant but also rounding the corner.

Yet further, it is preferable that contour lines on the lower side and the upper side in the tire radial direction, of the bead core, linearly extend respectively in a section in the tire widthwise direction. Further, it is preferable that an angle formed between the contour line on the lower side of the bead core and the tire radial direction is set in the range of 70 to 90 degrees, wherein 70 and 90 degrees are inclusive.

Yet further, in a section in the tire widthwise direction, the lateral width of each bead wire is preferably larger than the vertical width or height thereof. In the present invention, "vertical width" and "lateral width" represent the length in the tire radial direction and the length in the tire widthwise direction of each bead wire in a section in the tire widthwise direction, respectively.

Yet further, it is preferable that the adjacent bead wires are in contact with each other.

Yet further, it is preferable that the bead wires are fixed as a bundle by a metal band or a textile spirally wound around thereon in the extending direction of the bead core, to form a bead core.

Yet further, each bead core is preferably formed by winding plural bead wires plural times to stack the bead wires up in the tire radial direction as a bead wire unit and juxtaposing plural bead wire units in the tire widthwise direction. The winding starting end and the winding finishing end of each bead wire are positioned not to be aligned with each other in the tire circumferential direction.

Yet further, each bead core is preferably formed by winding plural bead wires plural times to stack the bead wires up in the tire radial direction as a bead wire unit and juxtaposing plural bead wire units in the tire widthwise direction. It is preferable that respective winding starting ends of the respective bead wires are offset from each other in the tire circumferential direction of the bead core and respective winding finishing ends of the respective bead wires are offset from each other in the tire circumferential direction of the bead core.

Yet further, a sectional shape in the tire widthwise direction of each bead core is preferably a parallelogram or a rectangle.

Yet further, a rubber member having rubber hardness of 85 Hs or higher is preferably provided to at least one of between the bead core and the carcass and on the upper side in the tire radial direction of the bead core. In the present invention, "rubber hardness" represents rubber hardness measured by using a durometer hardness tester (type A) at a test temperature of 23 °C according to JIS K6253.

### Effect of the Invention

According to the present invention, rotational rigidity of a bead core as a whole is increased, pulling-off of a carcass can be suppressed and thus durability of the bead portion 1 is significantly enhanced by providing each of adjacent bead wires with complementary shape portions.

### Brief Description of the Drawings

FIG. 1 is a sectional view in the tire widthwise direction of a bead portion of a pneumatic tire assembled with a rim, of an embodiment according to the present invention.
FIG. 2 is an enlarged sectional view showing in an enlarged manner a portion of the bead core shown in FIG. 1.
FIGS. 3(a) to (u) are sectional views in the tire widthwise direction exemplarily showing various types bead wires suitably applicable to the pneumatic tire of the present invention.
FIG. 4 is a sectional view in the tire widthwise direction exemplarily showing various types of bead wires suitably applicable to the pneumatic tire of the present invention.
FIG. 5 is a sectional view in the tire widthwise direction exemplarily showing various types of bead wires suitably applicable to the pneumatic tire of the present invention.
FIGS. 6(a) to 6(c) are sectional views in the tire widthwise direction exemplarily showing various types of bead wires suitably applicable to the pneumatic tire of the present invention.
FIG. 7(a) is a schematic side view of a bead core suitably applicable to the pneumatic tire of the present invention. FIG. 7(b) is a sectional view schematically showing a section in the tire widthwise direction of the bead core of FIG. 7(a).
FIGS. 8(a) and 8(b) are perspective views schematically showing the respective winding starting ends and the respective winding finishing ends of the bead wires suitably applicable to the pneumatic tire of the present invention.
FIG. 9 is a sectional view in the tire widthwise direction of the bead portion in the pneumatic tire of another embodiment according to the present invention applied to a rim.
FIG. 10 is a sectional view in the tire widthwise direction of the bead portion in the pneumatic tire of yet another embodiment according to the present invention applied to a rim.

### Explanation of Reference Numbers

- 1: Bead portion
- 2: Bead core
- 3: Bead wire
- 4: Carcass
- 5: Rim
- 7: Linear portion
- 7a: Upper side linear portion
- 7b: Lower side linear portion
- 8a, 8b: Contour line
- 9: Complementary shape portions
- 9a: Complementing shape portion
- 9b: Complemented shape portion
- 10: Corner portion
- 11: Metal band
- 15: Winding starting end
- 17: Winding finishing end
- 19: High hardness rubber

### Best Mode for carrying out the Invention

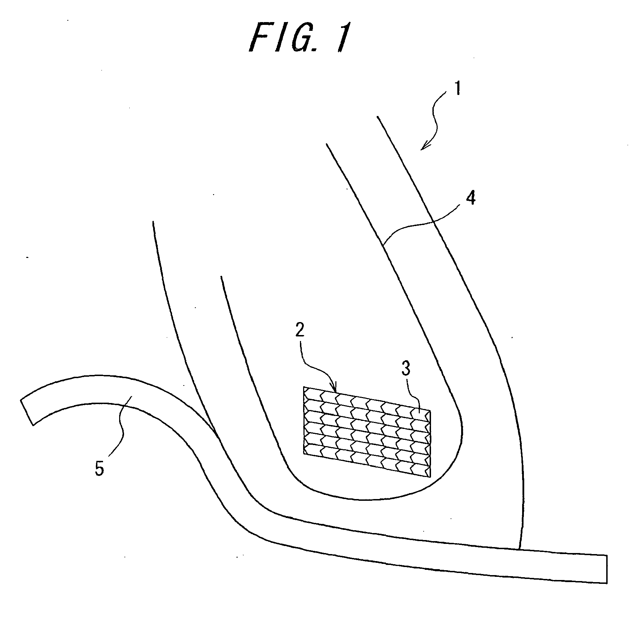

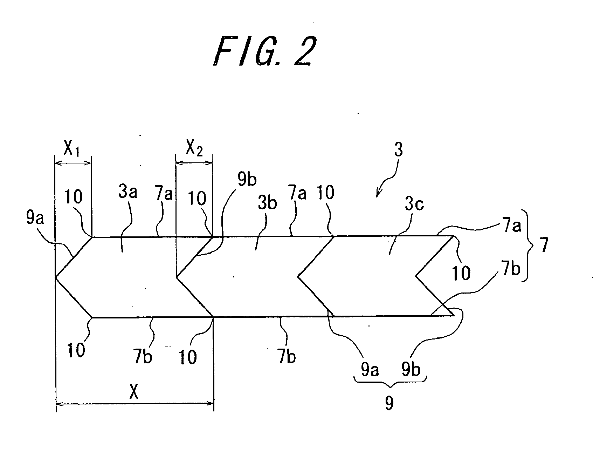

An embodiment of the present invention will be described hereinbelow with reference to drawings. FIG. 1 is a sectional view showing a section in the tire widthwise direction of a bead portion of a pneumatic tire (which will be referred to simply as a "tire" hereinafter) assembled with a rim, of an embodiment according to the present invention. FIG. 2 is an enlarged sectional view showing a bead core of FIG. 1 in an enlarged manner.

The tire of the present embodiment includes, as shown in FIG. 1, each bead portion 1, a carcass 4, and a belt layer (not shown) constituted of plural layers of rubber-coated steel cords and laminated to surround the outer periphery of a crown portion of the carcass 4, for reinforcing a tread portion (not shown). The carcass 4 is either a radial carcass or a bias carcass. The carcass 4 is formed, for example, by disposing a ply in which steel cords are radially disposed or disposed in a biased manner with respect to the tire rotating direction, in a toroidal shape across a pair of the bead cores 2. Ends of the carcass 4 are turned up around the bead cores 2 from the inner side toward the outer side of the tire, respectively, so that these ends are fixed on the bead cores 2.

In the present embodiment, the bead core 2 is constituted of annular bead wires 3 which are juxtaposed in plural rows (e.g. eight rows) in the tire widthwise direction and stacked up to plural stages (e.g. six stages). As shown in FIG. 2, each bead wire 3 (the bead wires in FIG. 2 will be referred to as a bead wire 3a, a bead wire 3b and a bead wire 3c from the left hand side toward the right hand side for convenience in explanation) has, in a section in the tire widthwise direction thereof, a linear portion 7 linearly extending at a slant with respect to the tire radial direction and complementary shape portions 9 complementing each other in shape between the adjacent bead wires 3a, 3b and 3c. The linear portion 7 includes an upper side linear portion 7a positioned on the upper side in the radial direction (the top side of FIG. 2) and a lower side linear portion 7b positioned on the lower side in the radial direction (the bottom side of FIG. 2) such that these two linear portions extend in parallel with each other. The complementary shape portions 9 are arranged between the two linear portions 7a, 7b of the bead wire 3 and constituted of a complementing shape portion 9a as a portion complementing in shape of another bead wire 3 adjacent thereto and a complemented shape portion 9b to be complemented in shape by the complementing shape portion 9a of yet another bead wire 3 adjacent thereto. For example, the complementing shape portion 9a having a protruding shape of the bead wire 3b complements in shape the complemented shape portion 9b having a concaved shape of the adjacent bead wire 3a, while the bead wire 3b is complemented in shape by the complementing shape portion 9a of the bead wire 3c adjacent thereto on the opposite side. The complementary engagements between the bead wires adjacent to each other in the tire widthwise direction are completed by these bead between themselves. That is, as shown in FIG. 2, the bead wire 3a and the bead wire 3b, as well as the bead wire 3b and the bead wire 3c, are engaged with each other, respectively, by the complementing shape portion 9a and the complemented shape portion 9b between the bead wire 3a and the bead wire 3b and those between the bead wire 3b and the bead wire 3c, respectively.

In the pneumatic tire described above, the adjacent bead wires 3 are engaged with each other by way of the complementing shape portion 9a and the complemented shape portion 9b thereof, whereby the bead wires can smoothly transfer stresses to each other. Due to this, rotational stress, applied on the bead core 2 when the tire is inflated and the shape of the tire is changed over time, is effectively dispersed between the respective bead wires 3 such that rotational deformation of the bead core 2 as a whole is reduced and, in other words, rotational rigidity thereof is enhanced. Further, since the aforementioned complementary shape portions 9 of the bead wires 3 act to restrict relative movement of adjacent bead wires 3 when rotational stress is applied on the bead core 2, movement of the bead wires 3 in the tire radial direction is suppressed. As a result, the distribution of tension in a section in the tire widthwise direction in each bead wire 3 upon application of rotational stress on the bead core 2 is made even.

As described above, according to the pneumatic tire of the present invention, rotational rigidity of a bead core as a whole is increased, pulling-off of a carcass 4 can be suppressed and thus durability of the bead portion 1 is significantly enhanced by providing adjacent bead wires 3 with complementary shape portions 9.

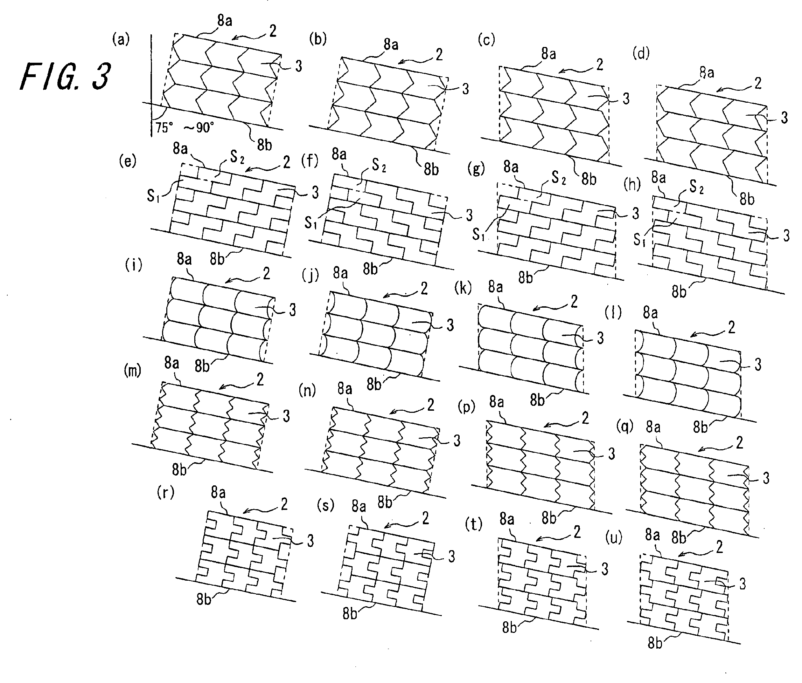

Next, various types of the bead wire 3 suitably applicable to the present invention will be described with reference to FIGS. 3(a)-3(u) to 6.

As described above, the shapes of the complementing shape portion 9a and the complemented shape portion 9b may be any shapes as long as the shapes allow adjacent bead wires 3 to complement each other in shape and therefore are not restricted to those of FIG. 1 and FIG. 2. For example, as shown in FIGS. 3(a) to (u), the complementing shape portion 9a and the complemented shape portion 9b may have plural, or curved or key/key groove-shaped protruding portions and concave portions, respectively. In FIGS. 3(a) to (d), (i) to (l) and (m) to (q), the complementary shape portions 9 extend all across a section between the two linear portions 7a, 7b. According to the structures in FIGS. 3(a) to (d), (i) to (l) and (m) to (q), since the complementary shape portions 9 of each bead wire 3 extend all across the section between the two linear portions 7a, 7b, when rotational stress caused by inflation of a tire and/or temporal change of the tire is applied on the bead wire 3, such stress is not locally exerted on the complementary shape portions 9, i.e. stress exerted on the complementary shape portions 9 is effectively dispersed. As a result, the magnitude of deformation of the bead wire 3 is reduced, whereby rotational rigidity thereof is further enhanced. The bead wires shown in FIGS. 3(e) to 3(h) each have a sectional contour configuration in the tire widthwise direction, which configuration is obtained by making two squares or rectangles of the same shape S₁, S₂ overlap with each other in an offset manner. The bead wires 3 may be arranged so that those vertically adjacent to each other in the tire radial direction are aligned in the lateral direction, as shown in FIGS. 3(a) and 3(b). Alternatively, the bead wires 3 may be arranged so that those vertically adjacent to each other in the tire radial direction are offset from each other in the lateral direction, as shown in FIGS. 3(c) and 3(d).

Further, in the examples as shown in FIGS. 3(a) to 3(u) viewed in a section in the tire widthwise direction, a contour line 8a and a contour line 8b on the upper side and the lower side in the tire radial direction of the bead core 2 linearly extend, respectively. According to these examples, since irregularities are not generated on the lower and upper sides in the tire radial direction of the bead core 2 and the shape of the bead wires 3 bundled for use is prevented from being deformed, the stability of a sectional shape of the bead cores is enhanced and the deformation in shape of the bead core 2 during vulcanization is suppressed. Further, since pushing force from the rim does not concentrate on a specific site of the bead wire, stress is evenly exerted on the entire portion of the bead wires, and therefore on the bead core as a whole constituted of the bead wires, whereby relatively high rotational rigidity of the bead core can be obtained. Yet further, the angle formed by the lower side contour line 8b with respect to the tire radial direction is preferably in the range of 75° to 90° (refer to FIG. 3(a), in particular). With such structures as described above, it is possible to impart the bead core 2 with a predetermined taper angle and thus impart the lower portion of the bead portion 1 abutting the rim with an adequate taper angle upon forming the bead core 2b by winding of the bead wire 3.

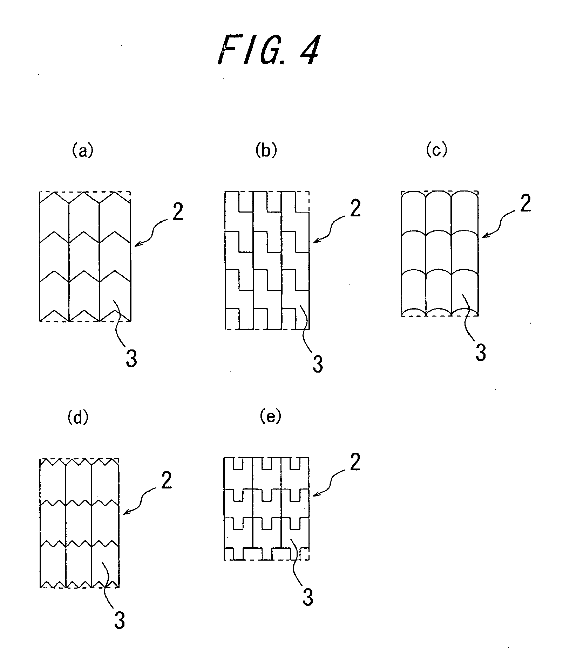

In the examples as shown in FIGS. 4(a) to 4(e), complementary engagement between adjacent bead wires 3 is effected between the bead wires 3 adjacent to each other in the tire radial direction when viewed in a section in the tire widthwise direction.

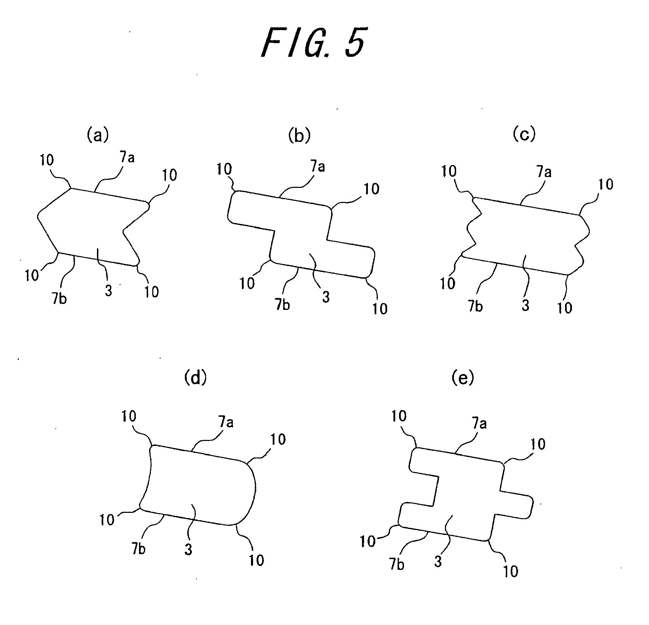

In the examples as shown in FIGS. 5(a) to 5(e), at least a corner portion 10, formed in a transient region from the linear portion 7a, 7b of each bead wire (the linear portions constitute linear contour lines of the bead core) to the complementary shape portion of the bead wire, are chamfered. Due to this structure, stress exerted on the corner portion 10 when rotational stress is generated in the bead core is effectively dispersed and thus durability of the bead core can be further enhanced. In this regard, it is more preferable that all of the corner portions of each bead wire 3 are chamfered.

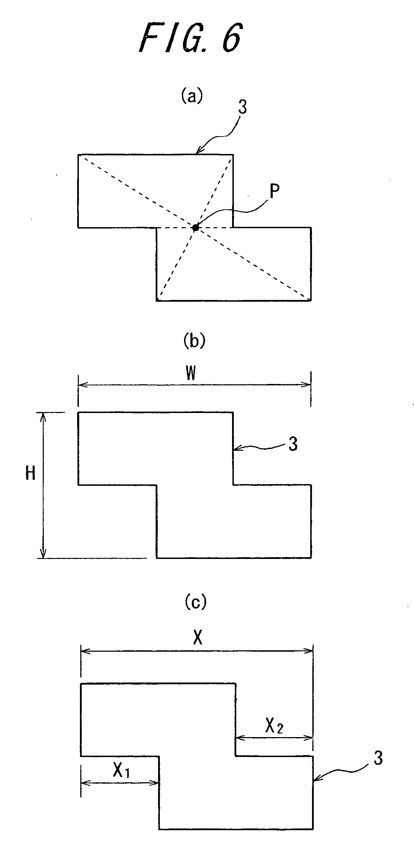

In the examples as shown in FIG. 6(a), the bead wire 3 is point-symmetrical about the center of gravity P of the bead wire 3 in a section in the tire widthwise direction thereof. Due to this structure, tensile force and compression force can be evenly distributed around the center of gravity P as the base point when rotational stress is exerted on the bead wire 3, whereby deformation of the bead wire 3 upon rotation of the bead wire 3 can be suppressed and resultingly rotational rigidity of the bead core can be further enhanced.

In the example as shown in FIG. 6(b), the lateral width W of each bead wire 3 is larger than the vertical width or height H in a section in the tire widthwise direction thereof. According to this structure, the number of winding in the tire radial direction can be increased, whereby an influence of stress concentration at an end portion of the bead wire 3 can be effectively reduced and durability of the bead portion 1 can be enhanced.

Further, in the examples as shown in FIG. 2 and FIG. 6(c), the length in the tire widthwise direction of the complementary shape portion of each bead wire, i.e. the sum of the lengths by which one bead wire is engaged with another bead wire in the tire widthwise direction (the sum of the length X₁ in the tire widthwise direction of the complementing shape portion 9a and the length X₂ in the tire widthwise direction of the complemented shape portion 9b in the shown examples), is at least 20 % of the length X in the tire widthwise direction of the bead wire. According to this structure, sufficient engagement force can be obtained and thus rotational rigidity of the bead core can be more effectively enhanced.

In the embodiment described above, the adjacent bead wires 3 are directly in contact with each other. Although coating rubber or the like may be interposed between these adjacent bead wires (not shown), it is preferable that the adjacent bead wires 3 are in direct contact with each other (refer to FIGS. 1 to 4) in terms of preventing deformation in shape of the bead core 2 caused by temporal creep deformation of coating rubber. Temporal change of the bead core 2 as a whole can be reduced by bringing the adjacent bead wires 3 into direct contact with each other, as compared with the case where coating rubber is interposed between the adjacent bead wires, whereby pulling-out of the carcass 4 can be suppressed and strain at end portions of the carcass 4 can be reduced.

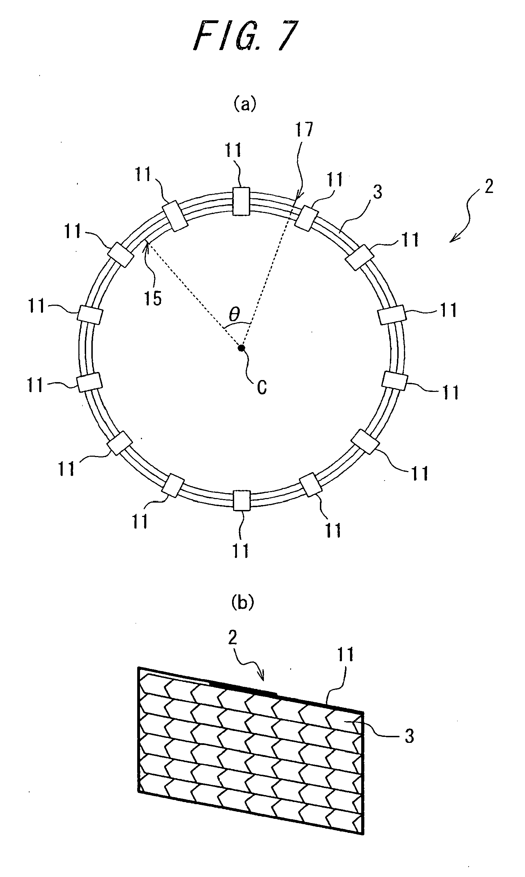

Further, as shown in FIGS. 7(a) and (b), the bead core 2 is preferably fixed as a bundle by a metal band 11. Due to this structure, deformation in shape of the bead core 2 during vulcanization and running of the tire can be suppressed. A similar member made of steel or aluminum alloy can be suitably employed in place of the metal band 11. As other options, for example, textile such as nylon, rayon and polyester may be used.

Yet further, as shown in FIG. 7(a), it is preferable that the bead core 2 has a structure in which: plural bead wires 3, wound around plural times to be stacked up in the tire radial direction as a laminated unit, are juxtaposed as units in plural rows in the tire widthwise direction; and the winding starting end 15 and the winding finishing end 17 of each bead wire 3 are not aligned with each other in the tire circumferential direction. The bead core 2 constituted of plural bead wires 3 as described above has an advantage in that time required for production of the bead core 2 can be significantly reduced, as compared with the bead core 2 structured by sequentially winding a single bead wire 3 in the tire radial direction. However, in a case where the bead core 2 is formed by winding plural bead wires 3 plural times to be stacked up in the tire radial direction as a laminated unit and juxtaposing the laminated units in plural rows in the tire widthwise direction, if the winding starting end 15 and the winding finishing end 17 of the bead wire 3 cluster at one site on the circumference of the bead core 2, there arises stepwise difference in rigidity at the site, stress tends to concentrate on the site and thus fracture strength may deteriorate. The winding starting end 15, in particular, may function as a fulcrum of the bending stress, causing damage to the bead portion 1. In view of this, by offsetting the positions in the circumferential direction of the winding starting end 15 and the winding finishing end 17 of the same one bead wire 3 from each other, stress concentration described above can be reduced, while the production efficiency of the bead core 2 is improved. Further, as shown in FIG. 7(a), an angle θ formed by a line linking the winding starting end 15 and the center C of the bead core 2, with respect to a line linking the winding finishing end 17 and the center of the bead core C, is preferably in the range of 40 to 80°. It is particularly preferable that the angle θ is 60°. In a case where the angle θ is smaller than 40°, concentration of stress may not be sufficiently reduced. In a case where the angle θ exceeds 80°, the weight balance on the circumference of the bead core 2 deteriorates, whereby the uniformity of the tire may deteriorate.

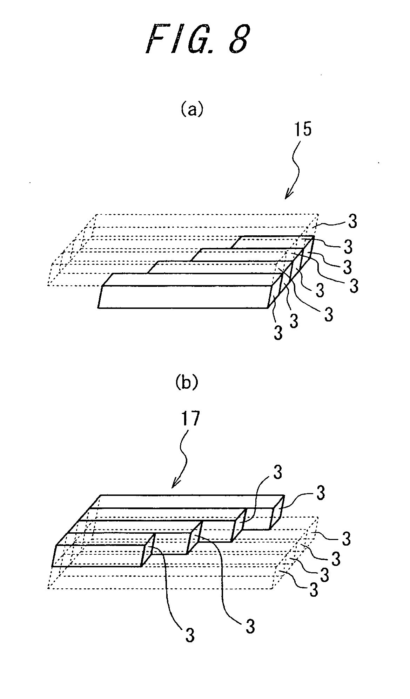

Further, it is preferable that the bead core 2 has a structure, as shown in FIGS. 8(a) and 8(b), in which: plural bead wires 3, wound around plural times to be stacked up in the tire radial direction as a laminated unit, are juxtaposed as units in plural rows in the tire widthwise direction; and positions in the tire circumferential direction of the winding starting end 15 and those of the winding finishing end 17 of each bead wire 3 are offset from each other. As described above, forming the bead core 2 by plural bead wires 3 is advantageous in terms of production efficiency. However, if the positions in the tire circumferential direction of the respective winding starting ends 15 of the bead wires 3 coincide with each other at one site and the positions in the tire circumferential direction of the winding finishing ends 17 of the same bead wires 3 coincide with each other at another site, i.e. if the respective ends 15 are aligned along one line in the tire widthwise direction and the respective ends 17 are aligned along another line in the tire widthwise direction, there are created stepped sites, stress tends to concentrate on these stepped sites and thus fracture strength may deteriorate. Further, these end-coinciding sites may each function as a fulcrum of stress, causing damages to the bead portion 1. In view of this, by offsetting the positions in the tire circumferential direction of the respective winding starting ends 15 of each bead wire 3 from each other, as well as offsetting the positions in the tire circumferential direction of the respective winding finishing ends 17 of the bead wire 3 from each other, stress concentration can be reduced, while the production efficiency of the bead core 2 is improved.

Yet further, the sectional shape in the tire widthwise direction of the bead core as a whole is preferably a rectangle as shown in FIGS. 3(a) and 3(b) or a parallelogram as exemplarily shown in FIG. 3(c) and 3(d). Due to this feature, the bead core as a whole has a sectional shape which can be easily obtained by forming.

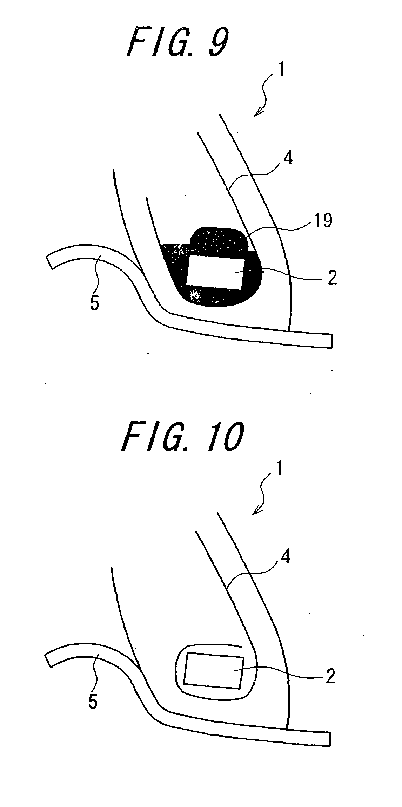

Further, as shown in FIG. 9, it is preferable that a high hardness rubber 19 having rubber hardness of 85 Hs or larger is provided at least one of between the bead core 2 and the carcass 4 and on the upper side in the tire radial direction of the bead core 2. Rubber having relatively high rubber hardness generally exhibits relatively small degree of flow during vulcanization, as compared with rubber having relatively low rubber hardness. Therefore, provision of the high hardness rubber 19 between the bead core 2 and the carcass 4 results in relatively small degree of rubber flow around the bead core 2 during vulcanization, whereby deformation of shape of the bead core 2 in vulcanization can be suppressed. Further, provision of the high hardness rubber 19 on the upper side in the tire radial direction of the bead core 2 can suppress collapse of the bead portion 1 when a load is exerted thereon, whereby shear strain generated in the bead portion 1 is decreased and durability of the bead portion 1 is improved.

The foregoing descriptions only show a part of embodiments of the present invention, and the structures described above may be combined with each other and/or various modifications may be added thereto unless such changes digress from the spirit of the present invention. For example, the carcass 4, which is provided to be turned up around the bead core 2 from the inner side toward the outer side of the tire, may be disposed to surround the circumference of the bead core 2, as shown in FIG. 10. According to this structure, the carcass 4 is further prevented from being pulled out and thus durability of the bead portion 1 is further enhanced. Further, the sectional shape in the tire widthwise direction of the bead wire 3 is not limited to those exemplarily shown in the present specification.

### Examples

Next, in order to confirm an effect of the present invention, there were prepared test tires according to the present invention (Examples) and a test tire according to the conventional technique (Conventional Example). These tires were analyzed for comparison by following tests.

The tires used for the tests are tubeless radial tires for track/bus each having tire size of 11R22.5 and have following characteristics, respectively.

The tire of Example 1 is a tire provided with a bead portion having the structure as shown in FIG. 1. Specifically, the bead core of the tire of Example 1 is formed by juxtaposing in the tire widthwise direction (or in the direction shown in FIG. 1) eight metal bead wires each having a tire-widthwise sectional shape as shown in FIG. 5(a), as a unit, stacking the units up in the tire radial direction by winding to six layers, and fixing the bead wires as a bundle by a metal band. The respective bead wires are in direct contact with each other and an angle formed by the linear portion of the bead wire with respect to the tire radial direction (an angle formed by the contour line on the lower side in the tire radial direction of the bead core with respect to the tire radial direction) is 75°. The positions in the tire circumferential direction of the winding starting end and the winding finishing end of the same one bead wire are offset from each other, and more specifically, an angle formed by a line linking the winding starting end to the center of the bead core, with respect to a line linking the winding finishing end to the center of the bead core (refer to FIG. 7(a)), is 60°. The positions in the tire circumferential direction of the respective winding starting ends of each bead wire are not aligned with each other, and the positions in the tire circumferential direction of the respective winding finishing ends of the bead wire are not aligned with each other, either. Further, in this tire, respective end portions of a one-layer carcass are turned up around the bead core from the inner side toward the outer side of the tire and a belt layer including four sub-layers is arranged on the outer peripheral side of the carcass in the tread portion. The structures of the tire other than the bead portion are substantially the same as the conventional pneumatic tire and therefore detailed explanations thereof will be omitted.

The tire of Example 2 has substantially the same structure as the tire of Example 1, except that the bead wire of the former has a section in the tire widthwise direction as shown in FIG. 5(b).

The tire of Example 3 has substantially the same structure as the tires of Examples 1 and 2, except that the bead wire of the former has a section in the tire widthwise direction as shown in FIG. 5(c).

The tire of Example 4 has substantially the same structure as the tires of Examples 1 to 3, except that the bead wire of the former has a section in the tire widthwise direction as shown in FIG. 5(d).

The tire of Example 5 has substantially the same structure as the tires of Examples 1 to 4, except that the bead wire of the former has a section in the tire widthwise direction as shown in FIG. 5(e).

The tire of Conventional Example is structured such that it differs from the Example 1 tire in that a bead core is formed by using a round filament bead wire, in place of the aforementioned bead wires shown in FIGS. 5(a) to (e). Specifically, the bead core is formed by winding a single bead wire of 1.8 mm diameter, made of the same metal as the bead wires of Examples 1 to 5, from the inner side toward the outer side in the tire radial direction sequentially to be stacked up to six layers in a coil-like shape such that the bead wire is juxtaposed in seven-row, eight-row, nine-row, eight-row, seven-row and six-row in the tire widthwise direction in the respective layers. The sectional shape of the bead core is substantially hexagonal. The number of windings of the bead wire of Conventional Example is determined such that the resulting total sectional area in the tire widthwise direction of the bead wires is the same as the total sectional areas in the tire widthwise direction of the bead wires of Examples 1 to 5. Other structures of the tire of Conventional Example are substantially the same as those of the tires of Examples 1 to 5.

Tests for analyzing rotational change of the bead core and durability of the bead portion were conducted by the method described below using each of the test tires described above.

### (Test for analyzing rotational change in the bead core)

Rotational change in the bead core was analyzed by: assembling each of the test tires with a rim having 8.25 size; taking a photograph of a sectional shape in the tire widthwise direction of the bead core by a CT scan device in a state where the tire had not been inflated and a state where the tire had been inflated at an internal air pressure of 700 kPa (relative pressure), respectively; and measuring relative angular change generated in the bead core. The results are shown in Table 1.

### (Test for analyzing durability)

The durability of the bead portion was assessed by assembling each of the test tires with a rim of size 8.25, inflating the tire at an internal air pressure of 700 kPa (relative pressure) at the room temperature of 45°C, making the tire run on an indoor tire tester at the speed of 60 km/h under a load of 57 kN (180% of the normal load) applied on the tire, and measuring a running distance achieved prior to occurrence of a trouble in the bead portion 1. The results are shown in Table 1.

**[Table 1]**

| | Sectional shape of bead wire | Rotational angle of bead core as a whole (degree) | Running distance achieved prior to occurrence of trouble (km) |
|---|---|---|---|
| Conventional Example 1 | Round (not shown) | 2.5 | 28000 |
| Example 1 | FIG. 5(a) | 1.2 | 45000 |
| Example 2 | FIG. 5(b) | 0.9 | 50000 |
| Example 3 | FIG. 5(c) | 1.2 | 45000 |
| Example 4 | FIG. 5(d) | 1.5 | 39000 |
| Example 5 | FIG. 5(e) | 0.8 | 51000 |

From the obvious results shown in Table 1, it has been confirmed that rotational rigidity of the bead core as a whole is enhanced and thus durability of the bead portion is significantly improved by making bead wires adjacent in the tire widthwise direction be engaged with each other by way of complementary shapes thereof.

Further, it has been confirmed that durability of the bead portion is further more improved by forming a complementing shape portion and a complemented shape portion constituting the complementary shape so as to have a key and key groove-configuration as shown in FIG. 5(e).

### Industrial Applicability

As is obvious from the foregoing descriptions, according to the present invention, it is possible to suppress pulling-out of a carcass by increasing rotational rigidity of a bead core as a whole and thus provide a pneumatic tire capable of enhancing durability of the bead portion.

## Claims

1. A pneumatic tire comprising:
a pair of bead portions (1) having bead cores (2) embedded therein, each bead core (2) being constituted of plural bead wires (3) extending in the tire circumferential direction;
a pair of side wall portions extending from the bead portions (1) toward the outer side in the tire radial direction;
a tread portion extending over the respective sidewall portions; and
a carcass (4) extending in a toroidal shape across the aforementioned portions and having respective end portions being turned up around the bead cores (2),
wherein the bead wires (3) each have complementary shape portions (9) in a section in the tire widthwise direction such that adjacent bead wires (3) are complementarily engageable with each other in the tire widthwise direction by the complementary shape portions (9), **characterised by**
the complementary engagements between each two bead wires (3) adjacent to each other in the tire widthwise direction being completed by these two bead wires (3) between themselves.

2. The pneumatic tire of claim 1, wherein each bead wire (3) has in a section in the tire widthwise direction two linear portions (7a, 7b) parallel to each other and linearly extending at a slant with respect to the tire radial direction, and the complementary portions (9) are arranged between the two linear portions.

3. The pneumatic tire of claim 2, wherein the complementary portions (9) extend all across a section between the two linear portions (7a, 7b).

4. The pneumatic tire of any of claims 1 to 3, wherein the total length in the tire widthwise direction of the complementary shape portions (9) of each bead wire (3) is at least 20 % of the length in the tire widthwise direction of the bead wire (3).

5. The pneumatic tire of any of claims 1 to 4, wherein each bead wire (3) has a contour configuration in a section in the tire widthwise direction, which contour configuration is obtained by making two squares or rectangles of the same shape overlap with each other in an offset manner.

6. The pneumatic tire of any of claims 1 to 5, wherein each bead wire (3) is point-symmetrical about the center of gravity in a section in the tire widthwise direction thereof.

7. The pneumatic tire of claim 2, or any preceding claim when dependent thereon, wherein a corner portion (10) formed in a transient region from the linear portion (7a, 7b) to the complementary portion (9) of each bead wire (3) is chamfered.

8. The pneumatic tire of any of claims 1 to 7, wherein contour lines on the lower side and the upper side in the tire radial direction, of the bead core (2), linearly extend respectively in a section in the tire widthwise direction.

9. The pneumatic tire of any of claims 1 to 8, wherein an angle formed between the contour line on the lower side of the bead core (2) and the tire radial direction is set in the range of 70 to 90 degrees, wherein 70 and 90 degrees are inclusive.

10. The pneumatic tire of any of claims 1 to 9, wherein, in a section in the tire widthwise direction, the lateral width of each bead wire (3) is larger than the vertical width or height thereof, and the vertical width and vertical height represent the length in the tire radial direction of each bead wire (3) in a section in the tire widthwise direction, and lateral width represents the length in the tire widthwise direction of each bead wire (3) in a section in the tire widthwise direction.

11. The pneumatic tire of any of claims 1 to 10, wherein the adjacent bead wires (3) are in contact with each other.

12. The pneumatic tire of any of claims 1 to 11, wherein the bead wires (3) are fixed as a bundle by a metal band or a textile spirally wound around thereon in the extending direction of the bead core (2), to form a bead core (2).

13. The pneumatic tire of any of claims 1 to 12, wherein each bead core (2) is formed by winding plural bead wires (3) plural times to stack the bead wires (3) up in the tire radial direction as a bead wire unit and juxtaposing plural bead wire units in the tire widthwise direction, and a winding starting end and a winding finishing end of each bead wire (3) are positioned not to be aligned with each other in the tire circumferential direction.

14. The pneumatic tire of any of claims 1 to 13, wherein each bead core (2) is formed by winding plural bead wires (3) plural times to stack the bead wires (3) up in the tire radial direction as a bead wire unit and juxtaposing plural bead wire units in the tire widthwise direction, and respective winding starting ends of the respective bead wires (3) are offset from each other in the tire circumferential direction of the bead core (2) and respective winding finishing ends of the respective bead wires (3) are offset from each other in the tire circumferential direction of the bead core (2).

15. The pneumatic tire of any of claims 1 to 14, wherein a sectional shape in the tire widthwise direction of each bead core (2) is a parallelogram or a rectangle.

16. The pneumatic tire of any of claims 1 to 15, wherein a rubber member having rubber hardness, which is a type A Shore hardness according to JIS K6253, of 85 Hs or higher is provided to at least one of between the bead core (2) and the carcass (4) and on the upper side in the tire radial direction of the bead core (2).

17. The pneumatic tire of any of claims 1 to 16, wherein each complementary shape portion (9) comprises a complementing shape portion (9a) and a complemented shape portion (9b), and the complementing shape portion (9a) having a protruding shape of a bead wire (3b) which complements in shape the complemented shape portion (9b) having a concaved shape of an adjacent bead wire (3a).

18. The pneumatic tire of claim 17, wherein the bead wires (3) are disposed such that the protruding shapes thereof unanimously face the outer side of the pneumatic tire in the widthwise direction.

## Patentansprüche

1. Luftreifen, der aufweist:
ein Paar Wulstabschnitte (1) mit darin eingebetteten Wulstkernen (2), wobei ein jeder Wulstkern (2) aus mehreren Drahtkernen (3) besteht, die sich in der Umfangsrichtung des Reifens erstrecken;
ein Paar Seitenwandabschnitte, die sich von den Wulstabschnitten (1) in Richtung der äußeren Seite in der radialen Richtung des Reifens erstrecken;
einen Laufflächenabschnitt, der sich über die jeweiligen Seitenwandabschnitte erstreckt; und
eine Karkasse (4), die sich in einer Ringform über die vorangehend erwähnten Abschnitte erstreckt und entsprechende Endabschnitte aufweist, die um die Wulstkerne (2) herum umgestülpt sind,
wobei die Drahtkerne (3) jeweils Abschnitte (9) mit einer komplementären Form in einem Querschnitt in der Breitenrichtung des Reifens aufweisen, so dass benachbarte Drahtkerne (3) komplementär miteinander in der Breitenrichtung des Reifens mittels der Abschnitte (9) mit einer komplementärer Form in Eingriff kommen können, **gekennzeichnet dadurch**, dass
die komplementären Eingriffe zwischen jeweils zwei Drahtkernen (3), die in der Breitenrichtung des Reifens einander benachbart sind, durch diese zwei Drahtkerne (3) zwischen sich komplettiert werden.

2. Luftreifen nach Anspruch 1, bei dem ein jeder Drahtkern (3) in einem Querschnitt in der Breitenrichtung des Reifens zwei lineare Abschnitte (7a, 7b) parallel zueinander aufweist, und die sich mit einer Neigung mit Bezugnahme auf die radiale Richtung des Reifens linear erstrecken, und wobei die komplementären Abschnitte (9) zwischen den zwei linearen Abschnitten angeordnet sind.

3. Luftreifen nach Anspruch 2, bei dem sich die komplementären Abschnitte (9) alle über einen Querschnitt zwischen den zwei linearen Abschnitten (7a, 7b) erstrecken.

4. Luftreifen nach einem der Ansprüche 1 bis 3, bei dem die gesamte Länge in der Breitenrichtung des Reifens der Abschnitte (9) eines jeden Drahtkernes (3) mit einer komplementären Form mindestens 20 % der Länge des Drahtkernes (3) in der Breitenrichtung des Reifens beträgt.

5. Luftreifen nach einem der Ansprüche 1 bis 4, bei dem ein jeder Drahtkern (3) eine Konturkonfiguration in einem Querschnitt in der Breitenrichtung des Reifens aufweist, wobei die Konturkonfiguration erhalten wird, indem veranlasst wird, dass sich zwei Quadrate oder Rechtecke der gleichen Form miteinander in einer versetzten Weise überdecken.

6. Luftreifen nach einem der Ansprüche 1 bis 5, bei dem ein jeder Drahtkern (3) punktsymmetrisch um den Schwerpunkt in einem Querschnitt in der Breitenrichtung des Reifens davon ist.

7. Luftreifen nach Anspruch 2 oder einem der vorhergehenden Ansprüche, wenn sie davon abhängig sind, bei dem ein Eckenabschnitt (10) abgeschrägt ist, der in einem Übergangsbereich vom linearen Abschnitt (7a, 7b) zum komplementären Abschnitt (9) eines jeden Drahtkernes (3) gebildet wird.

8. Luftreifen nach einem der Ansprüche 1 bis 7, bei dem sich Konturlinien des Wulstkernes (2) auf der unteren Seite und der oberen Seite in der radialen Richtung des Reifens linear jeweils in einem Querschnitt in der Breitenrichtung des Reifens erstrecken.

9. Luftreifen nach einem der Ansprüche 1 bis 8, bei dem ein Winkel, der zwischen der Konturlinie auf der unteren Seite des Wulstkernes (2) und der radialen Richtung des Reifens gebildet wird, im Bereich von 70 bis 90 Grad eingestellt wird, wobei 70 und 90 Grad eingeschlossen sind.

10. Luftreifen nach einem der Ansprüche 1 bis 9, bei dem in einem Querschnitt in der Breitenrichtung des Reifens die laterale Breite eines jeden Drahtkernes (3) größer ist als dessen vertikale Breite oder Höhe, und wobei die vertikale Breite und die vertikale Höhe die Länge in der radialen Richtung des Reifens von einem jeden Drahtkern (3) in einem Querschnitt in der Breitenrichtung des Reifens verkörpern, und wobei die laterale Breite die Länge in der Breitenrichtung des Reifens von einem jeden Drahtkern (3) in einem Querschnitt in der Breitenrichtung des Reifens verkörpert.

11. Luftreifen nach einem der Ansprüche 1 bis 10, bei dem die benachbarten Drahtkerne (3) miteinander in Kontakt sind.

12. Luftreifen nach einem der Ansprüche 1 bis 11, bei dem die Drahtkerne (3) als ein Bündel mittels eines Metallbandes oder einer Textilie fixiert werden, die spiralförmig darauf in der sich erstreckenden Richtung des Wulstkernes (2) gewickelt wird, um einen Wulstkern (2) zu bilden.

13. Luftreifen nach einem der Ansprüche 1 bis 12, bei dem ein jeder Wulstkern (2) durch Wickeln von mehreren Drahtkernen (3) mehrmals, um die Drahtkerne (3) in der radialen Richtung des Reifens als eine Drahtkerneinheit zu stapeln, und Aneinanderlegen von mehreren Drahtkerneinheiten in der Breitenrichtung des Reifens gebildet wird, und wobei ein Wickelstartende und ein Wickelabschlussende eines jeden Drahtkernes (3) so positioniert werden, dass sie in der Umfangsrichtung des Reifens nicht miteinander ausgerichtet sind.

14. Luftreifen nach einem der Ansprüche 1 bis 13, bei dem ein jeder Wulstkern (2) durch Wickeln von mehreren Drahtkernen (3) mehrmals, um die Drahtkerne (3) in der radialen Richtung des Reifens als eine Drahtkerneinheit zu stapeln, und Aneinanderlegen von mehreren Drahtkerneinheiten in der Breitenrichtung des Reifens gebildet wird, und wobei die jeweiligen Wickelstartenden der jeweiligen Drahtkerne (3) voneinander in der Umfangsrichtung des Reifens beim Wulstkern (2) versetzt sind, und wobei die jeweiligen Wickelabschlussenden der jeweiligen Drahtkernes (3) voneinander in der Umfangsrichtung des Reifens beim Wulstkern (2) versetzt sind.

15. Luftreifen nach einem der Ansprüche 1 bis 14, bei dem eine Querschnittsform in der Breitenrichtung des Reifens von einem jeden Wulstkern (2) ein Parallelogramm oder ein Rechteck ist.

16. Luftreifen nach einem der Ansprüche 1 bis 15, bei dem ein Gummielement mit einer Gummihärte, die eine Shore-Härte Typ A nach JIS K6253 ist, von 85 Hs oder höher bei mindestens einem von zwischen Wulstkern (2) und der Karkasse (4) und auf der oberen Seite in der radialen Richtung des Reifens beim Wulstkern (2) bereitgestellt wird.

17. Luftreifen nach einem der Ansprüche 1 bis 16, bei dem ein jeder Abschnitt (9) mit einer komplementären Form einen Abschnitt (9a) mit einer komplementären Form und einen Abschnitt (9b) mit einer komplementären Form aufweist, und wobei der Abschnitt (9a) mit einer komplementären Form eine vorstehende Form eines Drahtkernes (3b) aufweist, der in der Form den Abschnitt (9b) mit einer komplementären Form komplettiert, der eine konkave Form eines benachbarten Drahtkernes (3a) aufweist.

18. Luftreifen nach Anspruch 17, bei dem die Drahtkerne (3) so angeordnet sind, dass deren vorstehende Formen davon übereinstimmend zur äußeren Seite des Luftreifens in der Breitenrichtung hin liegen.

## Revendications

1. Bandage pneumatique, comprenant :
une paire de parties de talon (1), comportant des tringles (2) qui y sont noyées, chaque tringle (2) étant constituée par plusieurs fils d'acier de la tringle (3), s'étendant dans la direction circonférentielle du bandage pneumatique ;
une paire de parties de flanc, s'étendant à partir des parties de talon (1) vers le côté externe dans la direction radiale du bandage pneumatique ;
une partie de bande de roulement, s'étendant au-dessus des parties de flanc respectives ; et
une carcasse (4), s'étendant en une forme toroïdale à travers les parties ci-dessus et comportant des parties d'extrémité respectives retournées autour des tringles (2) ;
dans lequel les fils d'acier de la tringle (3) comportent chacun des parties de forme complémentaire (9) dans une section dans la direction de la largeur du bandage pneumatique, de sorte que les fils d'acier de la tringle adjacents (3) peuvent s'engager de manière complémentaire l'un dans l'autre dans la direction de la largeur du bandage pneumatique par l'intermédiaire des parties de forme complémentaire (9), **caractérisé en ce que** :
les engagements complémentaires entre deux fils d'acier de la tringle (3) adjacents l'un à l'autre dans la direction de la largeur du bandage pneumatique sont complétés par ces deux fils d'acier de la tringle (3) entre eux.

2. Bandage pneumatique selon la revendication 1, dans lequel chaque fil d'acier de la tringle (3) comporte dans une section dans la direction de la largeur du bandage pneumatique deux parties linéaires (7a, 7b) parallèles l'une à l'autre, et s'étendant de manière linéaire avec une inclinaison par rapport à la direction radiale du bandage pneumatique, les parties complémentaires (9) étant agencées entre les deux parties linéaires.

3. Bandage pneumatique selon la revendication 2, dans lequel les parties complémentaires (9) s'étendent entièrement sur une section entre les deux parties linéaires (7a, 7b).

4. Bandage pneumatique selon l'une quelconque des revendications 1 à 3, dans lequel la longueur totale dans la direction de la largeur du bandage pneumatique des parties de forme complémentaire (9) de chaque fil d'acier de la tringle (3) représente au moins 20% de la longueur, dans la direction de la largeur du bandage pneumatique, du fil d'acier de la tringle (3).

5. Bandage pneumatique selon l'une quelconque des revendications 1 à 4, dans lequel chaque fil d'acier de la tringle (3) a une configuration de contour dans une section dans la direction de la largeur du bandage pneumatique, cette configuration de contour étant établie en entraînant le chevauchement de deux carrés ou rectangles de la même forme, d'une manière décalée.

6. Bandage pneumatique selon l'une quelconque des revendications 1 à 5, dans lequel chaque fil d'acier de la tringle (3) présente une symétrie ponctuelle par rapport au centre de gravité dans une section de celui-ci, dans la direction de la largeur du bandage pneumatique.

7. Bandage pneumatique selon la revendication 2, ou selon l'une quelconque des revendications précédentes qui en dépend, dans lequel une partie de coin (10) formée dans une région de transition d'une partie linéaire (7a, 7b) vers la partie complémentaire (9) de chaque fil d'acier de la tringle (3) est chanfreinée.

8. Bandage pneumatique selon l'une quelconque des revendications 1 à 7, dans lequel des lignes de contour sur le côté inférieur et le côté supérieur, dans la direction radiale du bandage pneumatique, de la tringle (2), s'étendent respectivement de manière linéaire dans une section dans la direction de la largeur du bandage pneumatique.

9. Bandage pneumatique selon l'une quelconque des revendications 1 à 8, dans lequel un angle formé entre la ligne de contour sur le côté inférieur de la tringle (2) et la direction radiale du bandage pneumatique est ajusté dans l'intervalle allant de 70 à 90 degrés, 70 et 90 degrés étant inclus.

10. Bandage pneumatique selon l'une quelconque des revendications 1 à 9, dans lequel, dans une section de la direction de la largeur du bandage pneumatique, la largeur latérale de chaque fil d'acier de la tringle (3) est supérieure à la largeur verticale ou à la hauteur de celui-ci, la largeur verticale et la hauteur verticale représentant la longueur, dans la direction radiale du bandage pneumatique, de chaque fil d'acier de la tringle (3) dans une section dans la direction de la largeur du bandage pneumatique, la largeur latérale représentant la longueur, dans la direction de la largeur du bandage pneumatique, de chaque fil d'acier de la tringle (3), dans une section dans la direction de la largeur du bandage pneumatique.

11. Bandage pneumatique selon l'une quelconque des revendications 1 à 10, dans lequel les fils d'acier de la tringle adjacents (3) sont en contact l'un avec l'autre.

12. Bandage pneumatique selon l'une quelconque des revendications 1 à 11, dans lequel les fils d'acier de la tringle (3) sont fixés sous forme d'un faisceau par une bande métallique ou un textile enroulé en spirale autour de ceux-ci, dans la direction d'extension de la tringle (2), pour former une tringle (2).

13. Bandage pneumatique selon l'une quelconque des revendications 1 à 12, dans lequel chaque tringle (2) est formée en enroulant plusieurs fils d'acier de la tringle (3) à plusieurs reprises, en vue d'empiler les fils d'acier de la tringle (3) dans la direction radiale du bandage pneumatique, sous forme d'une unité de fils d'acier de la tringle, et en juxtaposant plusieurs unités de fils d'acier de la tringle dans la direction de la largeur du bandage pneumatique, une extrémité de début de l'enroulement et une extrémité de l'achèvement de l'enroulement de chaque fil d'acier de la tringle (3) étant positionnées de sorte à ne pas être alignées l'une avec l'autre dans la direction circonférentielle du bandage pneumatique.

14. Bandage pneumatique selon l'une quelconque des revendications 1 à 13, dans lequel chaque tringle (2) est formée en enroulant plusieurs fils d'acier de la tringle (3) à plusieurs reprises, en vue d'empiler les fils d'acier de la tringle (3) dans la direction radiale du bandage pneumatique, sous forme d'une unité de fils d'acier de la tringle, et en juxtaposant plusieurs unités de fils d'acier de la tringle dans la direction de la largeur du bandage pneumatique, les extrémités de début d'enroulement respectives des fils d'acier de la tringle respectifs (3) étant décalées les unes des autres dans la direction circonférentielle du bandage pneumatique de la tringle (2), les extrémités d'achèvement de l'enroulement des fils d'acier de la tringle respectifs (3) étant décalées les unes des autres dans la direction circonférentielle du bandage pneumatique de la tringle (2).

15. Bandage pneumatique selon l'une quelconque des revendications 1 à 14, dans lequel une forme de section, dans la direction de la largeur du bandage pneumatique, de chaque tringle (2) est un parallélogramme ou un rectangle.

16. Bandage pneumatique selon l'une quelconque des revendications 1 à 15, dans lequel un élément de caoutchouc, ayant une dureté de caoutchouc correspondant à un type de dureté Shore A selon JIS K6253, de 85 Hs ou plus, est agencé sur au moins une région, entre la tringle (2) et la carcasse (4) ou sur le côté supérieur dans la direction radiale du bandage pneumatique, de la tringle (2).

17. Bandage pneumatique selon l'une quelconque des revendications 1 à 16, dans lequel chaque partie de forme complémentaire (9) comprend une partie de forme de complémentation (9a) et une partie de forme complémentée (9b), la partie de forme de complémentation (9a) ayant une forme en saillie d'un fil d'acier de la tringle (3b), complémentant par sa forme la partie de forme complémentée (9b) ayant une forme concave d'un fil d'acier de la tringle adjacent (3a).

18. Bandage pneumatique selon la revendication 17, dans lequel les fils d'acier de la tringle (3) sont agencés de sorte que leurs formes en saillie font unanimement face au côté externe du bandage pneumatique, dans la direction de la largeur.
